# EUROPÄISCHE PATENTSCHRIFT

(11) **EP 1 177 226 B1**
(45) Veröffentlichungstag und Bekanntmachung des Hinweises auf die Patenterteilung: **31.03.2004**
(21) Anmeldenummer: 00931078.0
(22) Anmeldetag: 27.04.2000
(51) Int. Cl.: C08F 212/04

(54) **STYROLHALTIGE POPCORN-POLYMERISATE, VERFAHREN ZU DEREN HERSTELLUNG UND IHRE VERWENDUNG**
STYRENE-CONTAINING POPCORN POLYMERS, METHOD FOR PRODUCING SAME AND UTILISATION
POLYMERES DE TYPE POPCORN, CONTENANT DU STYRENE, LEUR PROCEDE DE PRODUCTION ET LEUR UTILISATION

(30) Priorität: 07.05.1999 DE 19920944
(43) Veröffentlichungstag der Anmeldung: 06.02.2002
(73) Patentinhaber: BASF AKTIENGESELLSCHAFT, 67056 Ludwigshafen (DE)
(72) Erfinder: ERNST, Andreas, D-67551 Worms (DE); MEFFERT, Helmut, D-67065 Ludwigshafen (DE); SANNER, Axel, D-67227 Frankenthal (DE); STEIN, Stefan, D-55286 Wörrstadt (DE); RUCHATZ, Folker, D-67433 Neustadt (DE)
(86) Internationale Anmeldenummer: PCT/EP2000/003809
(87) Internationale Veröffentlichungsnummer: WO 2000/068286

(56) Entgegenhaltungen:
- DE-A- 3 818 868

## Beschreibung

Die Erfindung betrifft unlösliche, Styrol-haltige Popcorn-Polymerisate, Verfahren zu ihrer Herstellung sowie die Verwendung der Popcorn-Polymerisate als Adsorbentien, Ionenaustauscher, Trägermaterialien und Filterhilfsmittel.

Der Name Popcorn-Polymerisate steht für schaumige, krustige Polymerisat-Körner mit Blumenkohl-artiger Struktur. Aufgrund ihrer meist starken Vernetzung sind Popcorn-Polymerisate in der Regel unlöslich und kaum quellbar.

Aus der DE 2 255 263 ist ein Verfahren zur Herstellung von unlöslichen, vernetzten und nur wenig quellbaren Polymerisaten des N-Vinylpyrrolidons bekannt, bei dem man N-Vinylpyrrolidon in wäßriger Lösung in Gegenwart eines cyclischen Säureamids, das mindestens zwei ethylenisch ungesättigte Gruppen enthält als Vernetzer polymerisiert. Die Polymerisationsreaktion wird dabei durch Erhitzen der Reaktionslösung auf mindestens 80°C gestartet und bei der Siedetemperatur des Wassers zu Ende geführt.

US 3,277,066 betrifft ein Verfahren zur Herstellung von unlöslichen Polymerisaten von N-Vinyllactamen durch Erhitzen von N-Vinyllactamen in Wasser in Gegenwart von Alkali- und Erdalkalimetalloxiden und -hydroxiden als Katalysator.

Aus Houben-Weyl, Band 14, Makrom. Stoffe, Teil 1, Seite 98 (1961) ist bekannt, daß aus Gemischen von Styrol mit Divinylbenzol Popcorn-Polymere gebildet werden. Derartige Polymerisate entstehen auch bei der technischen Butadien-Styrol-Polymerisation. Auch Acrylsäuremethylester neigt zur Bildung von Popcorn-Polymeren.

Popcorn-Polymere haben die Eigenschaften, daß sie bei Kontakt mit den Monomeren, aus denen sie bestehen oder mit anderen Monomeren, diese in Popcorn-Polymerisate verwandeln können. Sie wirken sozusagen als Keim für die Polymerisation. Die Aktivität geht jedoch verloren, wenn sie mit Luft in Berührung kommen.

Aus Ullmanns Encyklopädie der Techn. Chemie, 4. Aufl. Band 19, Seite 385 (1980) ist bekannt, daß beim Erhitzen von N-Vinylpyrrolidon mit Hydroxiden und Alkoholaten der Alkali- und Erdalkali-Metalle in spontaner Reaktion ein unlösliches, in Wasser schwach quellbares Polymerisat gebildet wird. Solche als Popcorn-Polymerisate bezeichneten Stoffe entstehen auch beim Erhitzen von N-Vinylpyrrolidon mit Divinyl-Verbindungen unter Ausschluß von Sauerstoff.

Aus der EP-A-0 177 812 ist ein Verfahren zur Herstellung von unlöslichen, nur wenig quellbaren, pulverförmigen Polymerisaten auf Basis von monoethylenisch ungesättigten Carbonsäureamiden, Carbonsäuren und Carbonsäureestern bekannt, bei dem man zum Starten der Polymerisation ein aktives Popcorn-Polymerisat verwendet, das durch Erhitzen einer Mischung aus 99,6 bis 98,8 Gew.-% N-Vinylpyrrolidon und 0,4 bis 1,2 Gew.-% einer mindestens 2 ethylenisch ungesättigte Doppelbindungen aufweisenden Verbindung als Vernetzer auf eine Temperatur von 100 bis 150°C in Abwesenheit von Sauerstoff und Polymerisationsinitiatoren erhältlich ist.

Diese Popcorn-Polymerisate werden beispielsweise zur Absorption von Gerbstoffen aus Getränken und als Ionenaustauscher verwendet. Carboxylgruppenhaltige Popcorn-Polymerisate können auch durch Verseifung von Acrylester- und Acrylamideinheiten enthaltenden Polymerisaten erhalten werden.

US 2,341,175 beschreibt die Popcorn-Polymerisation von Styrol mit mehrfach ungesättigten organischen Estern (z.B. Allylacrylat).
Die spontane Massepolymerisation von Styrol und Comonomer wird bei Temperaturen von 80°C und Reaktionszeiten von 6-7 Tagen durchgeführt. Das Reaktionsprodukt wird mit Benzol aufgearbeitet, abgetrennt, getrocknet und gemahlen. Man erhält pulverförmige, poröse, unlösliche und nichtquellende Styrolcopolymere.

EP-A-0 088 964 beschreibt ein Verfahren zur Herstellung von Popcorn-Polymeren aus basischen Vinylheterocyclen und bis zu 30 Gew.-% verschiedener Comonomere. Als Startvorlage verwendet man eine Mischung aus N-Vinylpyrrolidon und Divinylethylenharnstoff. Nach einsetzender Reaktion wird der wasserlösliche, basische Vinylheterocyclus (z.B. N-Vinylimidazol) zusammen mit Comonomer und Wasser zugefahren. Als in Betracht kommende Comonomere wird auch Styrol erwähnt.

Es bestand nun die Aufgabe, ein unlösliches und nur wenig quellbares Polymerisat zu finden, das chemisch inert und oberflächenreich ist sowie einfach und in akzeptablen Reaktionszeiten herstellbar ist. Zudem sollte das Polymerisat preiswert und möglichst lösemittelfrei herstellbar sein.

Ferner lag der vorliegenden Erfindung die Aufgabe zugrunde, neue Stoffe zur Verfügung zu stellen, die als Adsorbentien, Ionenaustauscher, Trägermaterialien und Filterhilfsmittel verwendbar sind.

Die Aufgabe wurde erfindungsgemäß gelöst mit unlöslichen, nur wenig quellbaren Popcorn-Polymerisate, enthaltend
a) 50 bis 99 Gew.-% Styrol und/oder mindestens eines einfach ungesättigten Styrolderivates;
b) 0,1 bis 40 Gew.-% mindestens eines N-Vinyllactams oder N-Vinylamins und
c) 0,1 bis 10 Gew.-% mindestens einer difunktionellen Vernetzerkomponente,
wobei sich die Gew.-% Angaben der Einzelkomponenten a) bis c) auf die Gesamtmenge des Popcorn-Polymerisates beziehen und sich zu 100 % addieren.

Unter einfach ungesättigten Styrolderivaten sind u.a. Sulfongruppen-haltige Styrole, wie z.B. Styrol-3-sulfonsäure oder Natrium-styrol-3-sulfonat sowie Aminogruppen-haltige Styrole gemeint. Als Aminogruppen-haltige Styrole sind beispielsweise Styrole zu verstehen, die in der 3-Position folgende Substituenten tragen: -CH₂N⁺(CH₃)₃Cl⁻, -CH₂N⁺(CH₃)₂CH₂CH₂OHCl⁻, -CH₂N(CH₃)₂, -CH₂NHCH₃, -CH₂NH₂. Die o.g Styrolderivate sind u.a. als Monomere zur Herstellung von Ionenaustauscherharzen bekannt.

Die Monomeren a) werden im Rahmen der Erfindung in Mengen von 50 bis 99 Gew.-%, bevorzugt 70 bis 99 Gew.-%, besonders bevorzugt in Mengen von 75 bis 97 Gew.-%, bezogen auf die Gesamtmenge des Popcorn-Polymerisates eingesetzt.

Als hydrophile Komponenten b) sind allgemein N-Vinyllactame oder N-Vinylamine gemeint. Bevorzugt seien dabei folgende polymerisierbare Comonomere genannt:

N-Vinyllactame und N-Vinylamine, insbesondere N-Vinylpyrrolidon, N-Vinylpiperidon, N-Vinylcaprolactam, N-Vinylimidazol, N-Vinyl-2-Methylimidazol, N-Vinyl-4-Methylimidazol sowie N-Vinylformamid.

Bevorzugte hydrophile Komponenten sind N-Vinylpyrrolidon, N-Vinylimidazol und N-Vinylcaprolactam, besonders bevorzugt N-Vinylpyrrolidon.

Die Monomeren b) werden im Rahmen der Erfindung in Mengen von 0,1 bis 40 Gew.-%, bevorzugt 0,5 bis 30 Gew.-%, besonders bevorzugt in Mengen von 1 bis 25 Gew.-%, bezogen auf die Gesamtmenge des Popcorn-Polymerisates eingesetzt.

Als Monomere c) sind generell Verbindungen gemeint, die mindestens 2 ethylenisch ungesättigte nichtkonjugierte Doppelbindungen im Molekül enthalten und somit als difunktionelle Vernetzer bei der Polymerisation wirken. Bevorzugte Vertreter der Monomere c) sind beispielsweise Alkylenbisacrylamide wie Methylenbisacrylamid und N,N'-Acryloylethylendiamin, N,N'-Divinylethylenharnstoff, N,N'-Divinylpropylenharnstoff, Ethyliden-bis-3-(Nvinylpyrrolidon), N,N'-Divinyldiimidazolyl(2,2')butan und 1,1'-bis-(3,3'-vinylbenzimidazolith-2-on)1,4-butan. Weitere geeignete Vernetzer sind beispielsweise Alkylenglykoldi(meth)-acrylate wie Ethylenglykoldiacrylat, Ethylenglykoldimethacrylat, Tetraethylenglykolacrylat, Tetraethylenglykoldimethacrylat, Diethylenglykolacrylat, Diethylenglykolmethacrylat, aromatische Divinylverbindungen wie Divinylbenzol und Divinyltoluol sowie Vinylacrylat, Allylacrylat, Allylmethacrylat, Divinyldioxan, Pentaerythrittriallylether sowie Gemische der Vernetzer.

Besonders bevorzugte Vernetzer sind N,N'-Divinylethylenharnstoff und Divinylbenzol.

Die Vernetzer werden in Mengen von 0,1 bis 10, bevorzugt 0,1 bis 8 Gew.-%, besonders bevorzugt in Mengen von 0,2 bis 5 Gew.-%, bezogen auf die Gesamtmenge des Popcorn-Polymerisates eingesetzt.

Bevorzugt sind Popcorn-Polymerisate, enthaltend
a) 60 bis 99 Gew.-% Styrol;
b) 0,5 bis 30 Gew.-% mindestens eines N-Vinyllactams oder N-Vinylamins, ausgewählt aus der Gruppe, bestehend aus N-Vinylpyrrolidon, N-Vinylpiperidon, N-Vinylcaprolactam, N-Vinylimidazol und methyliertem N-Vinylimidazol oder N-Vinylformamid;
c) 0,1 bis 8 Gew.-% mindestens einer difunktionellen Vernetzerkomponente ausgewählt aus der Gruppe, bestehend aus N,N'-Divinylethylenharnstoff, N,N'-Divinylpropylenharnstoff und Divinylbenzol.

Besonders bevorzugt sind Popcorn-Polymerisate, enthaltend
a) 70 bis 97 Gew.-% Styrol;
b) 1 bis 25 Gew.-% N-Vinylpyrrolidon und
c) 0,2 bis 5 Gew.-% N,N'-Divinylethylenharnstoff und/oder Divinylbenzol.

Die erfindungsgemäßen Popcorn-Polymerisate können zusätzlich bis zu 20 Gew.-% weitere radikalisch polymerisierbare Monomere d) enthalten, wobei sich in diesem Fall die Gew.-% Angaben der Monomere a) bis d) zu 100 % addieren.

Als weitere radikalisch polymerisierbare Monomere d) sind u.a. Acrylsäure und Methacrylsäure sowie deren Ester und Amide, beispielsweise Methyl-, Ethyl-, iso-Propyl-, n-Butyl- und tert.-Butylester bzw. -amide sowie Vinylacetat, Acrylnitril oder Vinylmethylether gemeint.

Gegenstand der Erfindung ist außerdem ein Verfahren zur Herstellung von unlöslichen, nur wenig quellbaren Popcorn-Polymerisaten, dadurch gekennzeichnet, daß man
a) 50 bis 99 Gew.-% Styrol und/oder mindestens eines einfach ungesättigten Styrolderivates;
b) 0,5 bis 40 Gew.-% mindestens eines N-Vinyllactams oder N-Vinylamins und
b) 0,1 bis 10 Gew.-% mindestens einer difunktionellen Vernetzerkomponente,
wobei sich die Gew.-% Angaben der Einzelkomponenten a) bis c) zu 100 % addieren, unter Ausschluß von Sauerstoff und Polymerisationsinitiatoren polymerisiert.

Die genaue Definition der Monomeren a) bis c) entspricht dabei der bereits eingangs erfolgten Beschreibung.

Bevorzugt ist ein Verfahren zur Herstellung von unlöslichen, nur wenig quellbaren Popcorn-Polymerisaten, dadurch gekennzeichnet, daß man
a) 70 bis 99 Gew.-% Styrol;
b) 0,5 bis 30 Gew.-% mindestens eines N-Vinyllactams oder N-Vinylamins, ausgewählt aus der Gruppe, bestehend aus N-Vinylpyrrolidon, N-Vinylpiperidon, N-Vinylcaprolactam, N-Vinylimidazol und methyliertem N-Vinylimidazol oder N-Vinylformamid und
c) 0,1 bis 8 Gew.-% mindestens einer difunktionellen Vernetzerkomponente ausgewählt aus der Gruppe, bestehend aus N,N'-Divinylethylenharnstoff, N,N'-Divinylpropylenharnstoff und Divinylbenzol polymerisiert.

Besonders bevorzugt ist das erfindungsgemäße Verfahren, bei dem man
a) 75 bis 97 Gew.-% Styrol;
b) 1 bis 25 Gew.-% N-Vinylpyrrolidon und
c) 0,2 bis 5 Gew.-% N,N'-Divinylethylenharnstoff und/oder Divinylbenzol polymerisiert.

Die Popcorn-Polymerisation wird nach bekannten Verfahren durchgeführt, z.B. als Fällungspolymerisation oder durch Polymerisieren in Substanz. Bevorzugt ist eine Arbeitsweise, bei der man, wie in der EP-A-0 177 812 beschrieben, die Popcorn-Polymerisation dadurch startet, daß man eine Mischung aus 99,6 bis 98,8 Gew.-% N-Vinylpyrrolidon und 0,4 bis 1,2 Gew.-% einer mindestens zwei ethylenisch ungesättigte Doppelbindungen aufweisenden Verbindung als Vernetzer auf eine Temperatur von 100 bis 150°C in Abwesenheit von Sauerstoff und Polymerisationsinitiatoren erhitzt. Diese Polymerisation wird insbesondere durch Anwesenheit geringer Mengen an Natronlauge oder Kalilauge initiiert. Innerhalb einer kurzen Zeit bildet sich ein polymerisationsfähiges Popcorn-Polymerisat, das bei Zugabe der restlichen Monomermischung, d.h. im besonderen des Monomeren Styrol und der restlichen Menge der Monomeren c), die Popcorn-Polymerisation dieser Monomeren ohne Induktionsperiode startet. Zudem ist es möglich, das polymerisationsfähige Popcorn-Polymerisat in eine Vorlage zu überführen, die Monomer und Vernetzer enthält, bzw. in die dann Monomer und Vernetzer zudosiert werden.

Die Popcorn-Polymerisation kann auch ohne Lösungsmittel durchgeführt werden. Dabei wird das Monomergemisch aus a), b) und c) durch Einleiten von Stickstoff inertisiert und anschließend auf eine Temperatur im Bereich von 20 bis 200°C, bevorzugt 100 bis 200°C, besonders bevorzugt 150 bis 180°C erhitzt. Es ist vorteilhaft, auch während der Polymerisation weiter einen schwachen Stickstoffstrom durch die Monomeren zu leiten.

Der Ausschluß von Sauerstoff wird auch dadurch erreicht, daß man den Ansatz bei einem Druck polymerisiert, der unter dem Atmosphärendruck liegt und bei dem die Monomeren sieden. Je nach Art der eingesetzten Monomeren und der gewählten Temperatur polymerisiert die Mischung innerhalb von 1 bis 20 Stunden. Beispielsweise bilden sich bei der Polymerisation von N-Vinylamiden mit 2 % N,N'-Divinylethylenharnstoff bei 150°C unter Rühren mit einem kräftigen Rührwerk und einem Druck von 310 mbar nach 2,5 Stunden die ersten Polymerisatteilchen, deren Menge langsam zunimmt, bis nach ca. 10 Stunden Polymerisationszeit das Reaktionsgemisch aus einem Pulver besteht. Das Popcorn-Polymerisat wird daraus in Ausbeuten von über 90 % in Form eines Pulvers mit einer durchschnittlichen Teilchengröße von etwa 10 µm bis 5 mm, vorzugsweise 10 µm bis 500 µm erhalten.

Zur Herstellung der Popcorn-Polymerisate wird die Fällungspolymerisation in Wasser bevorzugt. Die Konzentration der Monomeren wird dabei zweckmäßigerweise so gewählt, daß das Reaktionsgemisch über die gesamte Reaktionsdauer hinweg gut gerührt werden kann. Bei einer zu hohen Konzentration der Monomeren in Wasser, z.B. bei 95 %, werden die Polymerisatkörner oft klebrig, so daß ein Rühren schwieriger wird als in Abwesenheit von Wasser. Um die Reaktion in den üblichen Rührkesseln durchzuführen, wählt man Monomerkonzentrationen, bezogen auf die wäßrige Mischung, von etwa 5 bis 30, vorzugsweise 10 bis 20 Gew.-%. Falls kräftigere Rührwerke zur Verfügung stehen, kann die Monomerkonzentration der wäßrigen Lösung auch bis auf 50 Gew.-%, gegebenenfalls auch darüber erhöht werden.

In einigen Fällen kann es zweckmäßig sein, die Popcorn-Polymerisation mit einer relativ konzentrierten Lösung zu beginnen und dann im Verlauf der Reaktion Wasser zur Verdünnung zuzusetzen. Die Popcorn-Polymerisation wird bevorzugt bei pH-Werten oberhalb von 6 durchgeführt, um eine eventuell mögliche Verseifung der Monomeren b) und/oder c) zu vermeiden. Die Einstellung des pH-Wertes kann durch Zugabe geringer Mengen an Basen wie Natriumhydroxid oder Ammoniak oder der üblichen Puffersalze wie Soda, Natriumhydrogencarbonat oder Natriumphosphat erfolgen.

Der Ausschluß von Sauerstoff läßt sich am besten dadurch erreichen, daß man das zu polymerisierende Gemisch zum Sieden erhitzt und gegebenenfalls zusätzlich in einer Inertgasatmosphäre arbeitet, indem beispielsweise Stickstoff durch die Reaktionsmischung geleitet wird. Die Polymerisationstemperatur kann in einem weiten Bereich variiert werden, z.B. von etwa 20 bis 200, vorzugsweise 50 bis 150°C.

In einigen Fällen kann es auch vorteilhaft sein, zur völligen Entfernung von gelöstem Sauerstoff geringe Mengen - 0,1 bis 1 Gew.-%, bezogen auf Monomer - eines Reduktionsmittels wie Natriumsulfit, Natriumpyrosulfit, Natriumdithionit, Ascorbinsäure oder Mischungen der Reduktionsmittel zuzusetzen.

Bei einer besonders bevorzugten Ausführungsform der Fällungspolymerisation wird das wasserlösliche Comonomer, ein Teil des Vernetzers, Wasser und gegebenenfalls ein Puffer sowie ein Reduktionsmittel in einem schwachen Stickstoffstrom erhitzt, bis sich die ersten Polymerisateteilchen zeigen. Dann wird eine vorher durch Einblasen von Stickstoff inertisierte Mischung aus im besonderen Styrol, gegebenenfalls Vernetzer und gegebenenfalls Wasser als Verdünnungsmittel innerhalb von 0,2 bis 10 Stunden zugegeben. Das Styrol und der Vernetzer können auch in ein mit Wasser mischbares Lösungsmittel gelöst sein. Dies können z.B. niedere Alkohole wie Methanol, Ethanol, Isopropanol, n-Propanol oder t-Butanol sein. Diese Arbeitsweise hat den Vorteil, daß die Popcorn-Polymerisation eine nur verhältnismäßig kurze Zeit in Anspruch nimmt. Die Popcorn-Polymerisate können aus der wäßrigen Lösung isoliert und gereinigt werden.

Die Popcorn-Polymerisate fallen üblicherweise mit einer Ausbeute von etwa 90 bis > 99 % der theoretischen Ausbeute an. Sie können aus der wäßrigen Suspension durch Filtrieren oder Zentrifugieren mit anschließendem Auswaschen mit Wasser und Trocknen in üblichen Trocknern wie Umluft- oder Vakuumtrockenschrank, Schaufeltrockner oder Stromtrockner isoliert werden. Die Popcorn-Polymerisate sind in Wasser und allen Lösemitteln praktisch nicht löslich und quellen darin auch nur geringfügig.

Die so erhältlichen unlöslichen, nur wenig quellbaren Polymerisate können als Adsorbentien, Ionenaustauscher, Trägermaterialien und Filterhilfsmittel verwendet werden.

Anhand der folgenden Beispiele soll die Herstellung der erfindungsgemäßen Popcorn-Polymerisate näher erläutert werden.

### Beispiel 1

In einer Rührapparatur wurden 450 g destilliertes Wasser, 50 g N-Vinylpyrrolidon, 1 g N,N'-Divinylethylenharnstoff und 0,05 g Natriumhydroxid unter Einleiten eines schwachen Stickstoffstromes auf 60°C erhitzt. Anschließend wurden 0,1 g Natriumdithionit, gelöst in 10 g destilliertem Wasser zugesetzt. Die Mischung wurde auf 80°C erwärmt und auf dieser Temperatur gehalten. Nach 20 Minuten bildeten sich weiße Flocken. Nun wurde innerhalb von 4 Stunden eine Lösung von 3 g N,N'-Divinylethylenharnstoff in 150 g Styrol gleichmäßig zudosiert. Die weißen Flocken gingen in eine Polymerisatsuspension über, die langsam hochviskos wurde. Innerhalb von 2 Std. wurde mit 1000 ml dest. Wasser verdünnt. Anschließend wurde noch 1 Std. bei 80°C nacherhitzt und dann gekühlt. Die viskose Suspension wurde abfiltriert und mit Wasser gewaschen, um Verunreinigungen wie lösliches Polymer und Monomere zu entfernen. Der feuchte Feststoff wurde anschließend im Vakuum getrocknet. Die Ausbeute an Popcorn-Polymerisat nach dem Trocknen betrug 96 %.

### Beispiel 2

In einer Rührapparatur wurden 225 g destilliertes Wasser, 25 g N-Vinylpyrrolidon, 0,5 g N,N'-Divinylethylenharnstoff und 0,05 g Natriumhydroxid unter Einleiten eines schwachen Stickstoffstromes auf 60°C erhitzt. Anschließend wurden 0,1 g Natriumdithionit, gelöst in 10 g destilliertem Wasser zugesetzt. Die Mischung wurde auf 80°C erwärmt und auf dieser Temperatur gehalten. Nach 20 Minuten bildeten sich weiße Flocken. Nun wurde innerhalb von 4 Stunden eine Lösung von 6 g N,N'-Divinylethylenharnstoff in 200 g Styrol gleichmäßig zudosiert. Die weißen Flocken gingen in eine Polymerisatsuspension über, die langsam hochviskos wurde. Innerhalb von 2 Std. wurde mit 1000 ml dest. Wasser verdünnt. Anschließend wurde noch 2 Std. bei 80°C nacherhitzt und dann gekühlt. Die viskose Suspension wurde abfiltriert und mit Wasser gewaschen. Der feuchte Feststoff wurde anschließend im Vakuum getrocknet. Die Ausbeute an Popcorn-Polymerisat nach dem Trocknen betrug 94 %.

### Beispiel 3

In einer Rührapparatur wurden 225 g destilliertes Wasser, 25 g N-Vinylpyrrolidon, 0.5 g N,N'-Divinylethylenharnstoff und 0,05 g Natriumhydroxid unter Einleiten eines schwachen Stickstoffstromes auf 60°C erhitzt. 0,1 g Natriumdithionit, gelöst in 10 g destilliertem Wasser wurden zugesetzt. Die Mischung wurde auf 80°C erwärmt und auf dieser Temperatur gehalten. Nach 20 Minuten bildeten sich weiße Flocken. Nun wurde innerhalb von 4 Stunden eine Lösung von 6 g Divinylbenzol in 200 g Styrol gleichmäßig zudosiert. Die weißen Flocken gingen in eine Polymerisatsuspension über, die langsam hochviskos wurde. Innerhalb von 2 Std. wurde mit 1000 ml dest. Wasser verdünnt. Anschließend wurde noch 2 Std. bei 80°C nacherhitzt und dann gekühlt. Die viskose Suspension wurde nun abfiltriert und mit Wasser gewaschen. Der feuchte Feststoff wurde anschließend im Vakuum getrocknet. Die Ausbeute an Popcorn-Polymerisat nach dem Trocknen betrug 92 %.

### Beispiel 4

In einer Rührapparatur wurden 225 g destilliertes Wasser, 25 g N-Vinylpyrrolidon, 0.5 g N,N'-Divinylethylenharnstoff und 0,05 g Natriumhydroxid unter Einleiten eines schwachen Stickstoffstromes auf 60°C erhitzt. Anschließend wurden 0,1 g Natriumdithionit, gelöst in 10 g destilliertem Wasser zugesetzt. Die Mischung wurde auf 80°C erwärmt und auf dieser Temperatur gehalten. Nach 20 Minuten bildeten sich weiße Flocken. Nun wurden innerhalb von 4 Stunden 200 g Styrol gleichmäßig zudosiert. Die weißen Flocken gingen in eine Polymerisatsuspension über, die langsam hochviskos wurde. Innerhalb von 2 Std. wurde mit 1000 ml dest. Wasser verdünnt. Anschließend wurde noch 2 Std. bei 80°C nacherhitzt und dann gekühlt. Die viskose Suspension wurde nun abfiltriert und mit Wasser gewaschen. Der feuchte Feststoff wurde anschließend im Vakuum getrocknet. Die Ausbeute an Popcorn-Polymerisat nach dem Trocknen betrug 94 %.

### Beispiel 5

In einer Rührapparatur wurden 225 g destilliertes Wasser, 25 g N-Vinylpyrrolidon, 0.5 g N,N'-Divinylethylenharnstoff und 0,05 g Natriumhydroxid unter Einleiten eines schwachen Stickstoffstromes auf 60°C erhitzt. Danach wurden 0,1 g Natriumdithionit, gelöst in 10 g destilliertem Wasser zugesetzt. Die Mischung wurde auf 80°C erwärmt und auf dieser Temperatur gehalten. Nach 20 Minuten bildeten sich weiße Flocken. Nun wurde innerhalb von 4 Stunden eine Lösung von 6 g N,N'-Divinylethylenharnstoff und 300 g Styrol in 200 g absolutem Ethanol gleichmäßig zudosiert. Die weißen Flocken gingen in eine Polymerisatsuspension über, die langsam hochviskos wurde. Innerhalb von 2 Std. wurde mit 1000 ml dest. Wasser verdünnt. Anschließend wurde noch 2 Std. bei 80°C nacherhitzt und dann gekühlt. Die viskose Suspension wurde nun abfiltriert und mit Wasser gewaschen. Der feuchte Feststoff wurde anschließend im Vakuum getrocknet. Die Ausbeute an Popcorn-Polymerisat nach dem Trocknen betrug 96 %.

### Beispiel 6

In einer Rührapparatur wurden 20 g destilliertes Wasser, 2 g N-Vinylpyrrolidon, 0,05 g N,N'-Divinylethylenharnstoff und 0,01 g Natriumhydroxid unter Einleiten eines schwachen Stickstoffstromes auf 60°C erhitzt. Danach wurden 0,05 g Natriumdithionit, gelöst in 5 g destilliertem Wasser zugesetzt. Die Mischung wurde auf 80°C erwärmt und auf dieser Temperatur gehalten. Nach 20 Minuten bildeten sich weiße Flocken. Nun wurde innerhalb von 6 Stunden eine Lösung von 6 g Divinylbenzol in 200 g Styrol gleichmäßig zudosiert. Parallel dazu wurde innerhalb von 6 Stunden 1000 ml dest. Wasser zugegeben. Anschließend wurde noch 2 Std. bei 80°C nacherhitzt und dann gekühlt. Die viskose Suspension wurde nun abfiltriert und mit Wasser gewaschen. Der feuchte Feststoff wurde anschließend im Vakuum getrocknet. Die Ausbeute an Popcorn-Polymerisat nach dem Trocknen betrug 89 %.

## Patentansprüche

1. Unlösliche, nur wenig quellbare Popcorn-Polymerisate, enthaltend
a) 50 bis 99 Gew.-% Styrol und/oder mindestens eines einfach ungesättigten Styrolderivates;
b) 0,1 bis 40 Gew.-% mindestens eines N-Vinyllactams oder N-Vinylamins und
c) 0,1 bis 10 Gew.-% mindestens einer difunktionellen Vernetzerkomponente,
wobei sich die Gew.-% Angaben der Einzelkomponenten a) bis c) zu 100 % addieren.

2. Popcorn-Polymerisate nach Anspruch 1, enthaltend
a) 70 bis 99 Gew.-% Styrol;
b) 0,5 bis 30 Gew.-% mindestens eines N-Vinyllactams oder N-Vinylamins, ausgewählt aus der Gruppe, bestehend aus N-Vinylpyrrolidon, N-Vinylpiperidon, N-Vinylcaprolactam, N-Vinylimidazol und methyliertem N-Vinylimidazol oder N-Vinylformamid;
c) 0,1 bis 8 Gew.-% mindestens einer difunktionellen Vernetzerkomponente ausgewählt aus der Gruppe, bestehend aus N,N'-Divinylethylenharnstoff, N,N'-Divinylpropylenharnstoff und Divinylbenzol.

3. Popcorn-Polymerisate nach einem der Ansprüche 1 oder 2, enthaltend
a) 75 bis 97 Gew.-% Styrol;
b) 1 bis 25 Gew.-% N-Vinylpyrrolidon und
c) 0,2 bis 5 Gew.-% N,N'-Divinylethylenharnstoff und/oder Divinylbenzol.

4. Popcorn-Polymerisate nach einem der Ansprüche 1 bis 3, die zusätzlich 0 bis 20 Gew.-% weitere radikalisch polymerisierbare Monomere d) enthalten.

5. Verfahren zur Herstellung von unlöslichen, nur wenig quellbaren Popcorn-Polymerisaten, definiert gemäß Anspruch 1, **dadurch gekennzeichnet, daß** man
a) 50 bis 99 Gew.-% Styrol und/oder mindestens eines einfach ungesättigten Styrolderivates;
b) 0,1 bis 40 Gew.-% mindestens eines N-Vinyllactams oder N-Vinylamins und
b) 0,1 bis 10 Gew.-% mindestens einer difunktionellen Vernetzerkomponente,
wobei sich die Gew.-% Angaben der Einzelkomponenten zu 100 % addieren, unter Ausschluß von Sauerstoff und Polymerisationsinitiatoren polymerisiert.

6. Verfahren nach Anspruch 5, **dadurch gekennzeichnet, daß** man
a) 70 bis 99 Gew.-% Styrol;
b) 0,5 bis 30 Gew.-% mindestens eines N-Vinyllactams oder N-Vinylamins, ausgewählt aus der Gruppe, bestehend aus N-Vinylpyrrolidon, N-Vinylpiperidon, N-Vinylcaprolactam, N-Vinylimidazol und methyliertem N-Vinylimidazol oder N-Vinylformamid und
c) 0,1 bis 8 Gew.-% mindestens einer difunktionellen Vernetzerkomponente ausgewählt aus der Gruppe, bestehend aus N,N'-Divinylethylenharnstoff, N,N'-Divinylpropylenharnstoff und Divinylbenzol polymerisiert.

7. Verfahren nach einem der Ansprüche 5 oder 6, **dadurch gekennzeichnet, daß** man
a) 75 bis 97 Gew.-% Styrol;
b) 1 bis 25 Gew.-% N-Vinylpyrrolidon und
c) 0,2 bis 5 Gew.-% N,N'-Divinylethylenharnstoff und/oder Divinylbenzol polymerisiert.

8. Verfahren nach einem der Ansprüche 5 bis 7, **dadurch gekennzeichnet, daß** man die Polymerisation bei einer Temperatur von 20°C bis 200°C durchführt.

9. Verwendung der unlöslichen, nur wenig quellbaren Popcorn-Polymerisate, definiert gemäß einem der Ansprüche 1 bis 4 als Ionenaustauscher, Adsorberharz und Filterhilfsmittel.

## Claims

1. An insoluble, only slightly swellable popcorn polymer containing
a) from 50 to 99% by weight of styrene and/or at least one monounsaturated styrene derivative,
b) from 0.1 to 40% by weight of at least one N-vinyllactam or N-vinylamine and
c) from 0.1 to 10% by weight of at least one difunctional crosslinking component,
the stated percentages by weight of the individual components a) to c) summing to 100%.

2. A popcorn polymer as claimed in claim 1, containing
a) from 70 to 99% by weight of styrene,
b) from 0.5 to 30% by weight of at least one N-vinyllactam or N-vinylamine selected from the group consisting of N-vinylpyrrolidone, N-vinylpiperidone, N-vinylcaprolactam, N-vinylimidazole and methylated N-vinylimidazole and N-vinylformamide, and
c) from 0.1 to 8% by weight of at least one difunctional crosslinking component selected from the group consisting of N,N'-divinylethyleneurea, N,N'-divinylpropyleneurea and divinylbenzene.

3. A popcorn polymer as claimed in claim 1 or 2, containing
a) from 75 to 97% by weight of styrene,
b) from 1 to 25% by weight of N-vinylpyrrolidone and
c) from 0.2 to 5% by weight of N,N'-divinylethyleneurea and/or divinylbenzene.

4. A popcorn polymer as claimed in any of claims 1 to 3, which additionally contains from 0 to 20% by weight of further monomers d) capable of free radical polymerization.

5. A process for the preparation of insoluble, only slightly swellable popcorn polymers, defined according to claim 1, wherein
a) from 50 to 99% by weight of styrene and/or at least one monounsaturated styrene derivative,
b) from 0.1 to 40% by weight of at least one N-vinyllactam or N-vinylamine and
c) from 0.1 to 10% by weight of at least one difunctional crosslinking component,
the stated percentages by weight of the individual components summing to 100%, are polymerized in the absence of oxygen and polymerization initiators.

6. A process as claimed in claim 5, wherein
a) from 70 to 99% by weight of styrene,
b) from 0.5 to 30% by weight of at least one N-vinyllactam or N-vinylamine selected from the group consisting of N-vinylpyrrolidone, N-vinylpiperidone, N-vinylcaprolactam, N-vinylimidazole and methylated N-vinylimidazole and N-vinylformamide, and
c) from 0.1 to 8% by weight of at least one difunctional crosslinking component selected from the group consisting of N,N'-divinylethyleneurea, N,N'-divinylpropyleneurea and divinylbenzene
are polymerized.

7. A process as claimed in claim 5 or 6, wherein
a) from 75 to 97% by weight of styrene,
b) from 1 to 25% by weight of N-vinylpyrrolidone and
c) from 0.2 to 5% by weight of N,N'-divinylethyleneurea and/or divinylbenzene
are polymerized.

8. A process as claimed in any of claims 5 to 7, wherein the polymerization is carried out at from 20°C to 200°C.

9. The use of an insoluble, only slightly swellable popcorn polymer, defined according to any of claims 1 to 4, as an ion exchanger, adsorber resin or filter assistant.

## Revendications

1. Polymères pop-corn insolubles, seulement peu susceptibles de gonflement, contenant
a) 50 à 99 % en poids de styrène et/ou d'au moins un dérivé de styrène monoinsaturé;
b) 0,1 à 40 % en poids d'au moins un N-vinyllactame ou d'au moins une N-vinylamine et
c) 0,1 à 10 % en poids d'au moins un composant réticulant difonctionnel,
tandis que les indications en % en poids des composants individuels a) à c) s'ajoutent pour donner un total de 100 %.

2. Polymères pop-corn selon la revendication 1, contenant
a) 70 à 99 % en poids de styrène;
b) 0,5 à 30 % en poids d'au moins un N-vinyllactame ou d'au moins une N-vinylamine, choisis dans le groupe consistant en N-vinylpyrrolidone, N-vinylpipéridone, N-vinylcaprolactame, N-vinylimidazole et N-vinylimidazole méthylé ou N-vinylformamide;
c) 0,1 à 8 % en poids d'au moins un composant réticulant difonctionnel choisi dans le groupe consistant en N,N'-divinyl-éthylèneurée, N,N'-divinylpropylèneurée et divinylbenzène.

3. Polymères pop-corn selon les revendications 1 ou 2, contenant
a) 75 à 97 % en poids de styrène;
b) 1 à 25 % en poids de N-vinylpyrrolidone et
c) 0,2 à 5 % en poids de N,N'-divinyléthylèneurée et/ou de divinylbenzène.

4. Polymères pop-corn selon les revendications 1 à 3, qui contiennent en outre 0 à 20 % en poids d'autres monomères polymérisables par voie radicalaire d).

5. Procédé pour la préparation de polymères pop-com insolubles, seulement peu susceptibles de gonflement, définis selon la revendication 1, **caractérisé par le fait qu'**on polymérise en l'absence d'oxygène et d'initiateurs de polymérisation
a) 50 à 99 % en poids de styrène et/ou d'au moins un dérivé de styrène monoinsaturé;
b) 0,1 à 40 % en poids d'au moins un N-vinyllactame ou d'au moins une N-vinylamine et
c) 0,1 à 10 % en poids d'au moins un composant réticulant difonctionnel,
tandis que les indications en % en poids des composants individuels a) à c) s'ajoutent pour donner un total de 100 %.

6. Procédé selon la revendication 5, **caractérisé par le fait qu'**on polymérise
a) 70 à 99 % en poids de styrène;
b) 0,5 à 30 % en poids d'au moins un N-vinyllactame ou d'au moins une N-vinylamine, choisis dans le groupe consistant en N-vinylpyrrolidone, N-vinylpipéridone, N-vinylcaprolactame, N-vinylimidazole et N-vinylimidazole méthylé ou N-vinylformamide; et
c) 0,1 à 8 % en poids d'au moins un composant réticulant difonctionnel choisi dans le groupe consistant en N,N'-divinyléthylèneurée, N,N'-divinylpropylèneurée et divinyl-benzène.

7. Procédé selon l'une des revendications 5 ou 6, **caractérisé par le fait qu'**on polymérise
a) 75 à 97 % en poids de styrène;
b) 1 à 25 % en poids de N-vinylpyrrolidone et
c) 0,2 à 5 % en poids de N,N'-divinyléthylèneurée et/ou de divinylbenzène.

8. Procédé selon l'une des revendications 5 à 7, **caractérisé par le fait qu'**on conduit la polymérisation à une température de 20°C à 200°C.

9. Utilisation des polymères pop-corn insolubles, seulement peu susceptibles de gonflement définis selon l'une des revendications 1 à 4, comme échangeur d'ions, résine d'adsorption et auxiliaire de filtration.
